# EUROPEAN PATENT APPLICATION

(11) **EP 4 821 808 A1**
(43) Date of publication of application: **14.10.2026**
(21) Application number: 25382356.1
(22) Date of filing: 08.04.2025
(51) Int. Cl.: B64C 11/04, B64C 11/20, F01D 21/04, B64C 27/00

(54) **PROPELLER AND METHOD FOR SAFELY RELEASING A RUPTURED BLADE**

(71) Applicant: Airbus Operations S.L.U., 28906 Getafe Madrid (ES)
(72) Inventor: MARTINO GONZALEZ, Esteban, 28906 Getafe (ES); ARMERO CASTRO, Bernardo, 28906 Getafe (ES)

(57) **Abstract**

The invention relates to a propeller (10) comprising a hub (11) and a plurality of blades, at least one blade (13) comprising a restraining device (20) adapted to restrain a portion of the blade (13) in case of rupture of the blade, characterized in that it comprises a release device adapted to autonomously disable the restraining device (20) so as to release the ruptured portion of the blade.

## Description

The invention relates to the field of propellers for aircrafts, such as propellers to propel and/or lift an aircraft. More particularly the invention relates to propellers comprising blades, as well as to methods and a computer implemented method to secure the propeller and its surroundings in case of a blade rupture. The invention extends to aircrafts comprising such propellers and/or adapted to implement such methods.

Blades for propellers and fans work under extreme mechanical conditions. They are subjected to high levels of stress, especially during accelerations, as well as to high levels of vibration. They are additionally subjected to considerable forces in a continuous and prolonged manner during long flights, as well as to impacts in the event of collisions of a blade with a bird, for example.

The design parameters and security margins of such blades are carefully set, but in some instances, it might happen that a blade breaks and a portion of the blade is released. In this case, the blade portion may impact other blades or other parts of the aircraft, causing serious damage.

Some technical solutions proposed in the state of the art include the reinforcement of the fuselage portions that may predictably be impacted by a free blade portion in case a ruptured blade is released from a propeller. However, predicting the trajectory of a free blade portion at high speed is not simple as the blade usually has complex aerodynamic shapes. An acceptable protection of large portions of the aircraft from such impacts therefore induces significant weight increase to the aircraft. Weight is a critical parameter in aircraft design, in particular in order to minimize the aircraft's energy consumption.

FR2942454 proposes a propeller blade with retaining means extending within the blade and anchored at an inner radial position of the hub, such that in case of rupture of the blade or of the hub itself, the blade is retained by the retaining means, and its ejection from the propeller is avoided.

However, such solutions present various disadvantages. In particular when a blade is broken - even though it is radially retained to the hub - it will flutter in the air flow and induce a high level of vibrations in the whole propeller. Moreover, this fluttering may cause impact between the ruptured blade and adjacent blades, potentially damaging or even rupturing the adjacent blades as well. Such effects may induce the rapid loss of the propeller, impeding the aircraft's maneuverability.

The invention aims to provide a safe propeller and methods which will ensure, in case of a blade rupture, no damage to other portions of the propeller or of the aircraft.

The invention also aims to provide a propeller and methods which, in case of a blade rupture, will allow the propeller to continue propelling the aircraft, such that it may rejoin its destination, or at least the closest airport, safely.

The invention intends to provide a propeller and a method which will involve minimal weight addition to the aircraft.

The invention proposes a propeller comprising:
- a hub with a longitudinal axis, called rotation axis,
- a plurality of blades,
   - each blade extending from a root to a tip,
   - each blade being anchored by its root to the hub so as to extend radially from the hub,
   - at least one blade comprising a restraining device anchored within the blade, said restraining device being adapted to restrain a portion of the blade in case of rupture of a proximal portion of the blade,
characterized in that it also comprises a release device adapted to autonomously disable the restraining device.

The longitudinal axis of the hub is called rotation axis because it corresponds to the rotation axis of the propeller.

In the whole text, the terms 'radial' and 'radially' are used with respect to the rotation axis of the hub. The blades extend from root to tip along a longitudinal direction corresponding to the blade's span (or spanwise direction), and they are mounted by their root on the hub around the hub with their longitudinal direction extending generally radially from the hub with respect to the rotation axis. More generally, the spanwise direction comprises a component which is radial to the rotation axis. In some embodiments it may comprise a second component parallel to the rotation axis.

The blades are anchored to the hub by their roots. The blades are anchored by their root to the hub so as to be retained to the huh in an outward radial direction. The blades may be mounted with some degrees of freedom on the hub, for example a rotational freedom around their spanwise direction so as to vary their angle of incidence (or pitch).

The restraining device is adapted to radially restrain a portion of the blade in case of rupture of the blade. In particular the restraining device is adapted to restrain a ruptured portion of the blade comprising the distal portion and part of the proximal portion of the blade, in case of rupture of the blade in its proximal portion. The restraining device is designed so as to withstand the rupture of the ruptured portion of the blade and its centrifugal force at any normal rotation and acceleration regime of the propeller. To do so the restraining device comprises at least one anchor within the blade, called blade anchor. The restraining device also comprises at least a second anchor either in the blade's root or in the hub, any way called hub anchor.

In the whole text, the terms 'proximal' and 'distal', are defined with respect to the hub: proximal refers to elements that are closer to the hub than elements that are distal from the hub, in particular in radial directions with respect to the rotation axis. In particular 'proximal portion' and 'distal portion' are used in reference to portions of the blade, along the span of the blade. The proximal portion is situated proximal to the hub, while the distal portion is distal from the hub. As such the proximal portion of a blade comprises the root, while the distal portion comprises the tip of the blade. The proximal portion and the distal portion are separated in this text by the blade anchor of the restraining device within the blade. Any portion of the blade extending from the root to the blade anchor is part of the proximal portion of the blade, while any portion extending from the blade anchor to the tip is part of the distal portion of the blade.

As a consequence, in a propeller of the invention, the restraining device cannot restrain a ruptured portion of the blade from being ejected at the moment of the rupture when the rupture happens in the distal portion of the blade. The inventors consider that it is possible to determine the maximal admitted debris size that can be uncontrollably released upon rupture in the distal portion of the blade, such that the location of the blade anchor along the blade's span can be determined based on this acceptability.

In the invention, the restraining device is thus adapted to restrain a ruptured portion of the blade (including the whole distal portion) in the event of a rupture in the proximal portion of the blade, thereby avoiding ejection of large blade debris. The ruptured portion, once separated from the blade's root, is restrained by the restraining device. The ruptured portion is radially restrained by the restraining device such that it is not uncontrollably released.

A proximal end of the restraining device and a distal end of the restraining device may also be defined. The distal end of the restraining device is anchored within the blade at the blade anchor. The proximal end of the restraining device is beneficially anchored to the hub at the hub anchor.

However, in some embodiments, the proximal end of the restraining device is beneficially anchored to the root of the blade itself. Thereby, the ruptured portion is retained to the blade's root, but can be released by releasing the whole blade from the hub.

The release device is adapted to disable the restraining device, that is to say the release device is adapted to disable the restraining function of the restraining device. Upon activation of the release device the ruptured portion of the blade is thus released from the propeller. The release device is adapted to autonomously disable the restraining device, without actuation or supervision of a human. More particularly the release device is adapted to autonomously disable the restraining device based on one or more predetermined criterion.

More particularly, the release device is adapted to disable the restraining device at a predetermined position of the blade around the rotation axis.

In particular the release device is adapted to disable the restraining device at a predetermined position of the blade around the rotation axis when the propeller is in rotation around its rotation axis. The release device is adapted to disable the restraining device at a predetermined angular position in a predetermined angular sector, called safe sector, around the rotation axis. There may be one or more safe sectors for a given propeller. The safe sectors may be determined depending on assessments of risks caused by the release of a ruptured portion of a blade. In particular, the safe sectors may be defined taking into account the geometry of the aircraft, to minimize risks of the rupture portion damaging the aircraft.

The safe sectors may also be determined taking into account the location or operating mode of the aircraft such that the safe sectors may be different when the aircraft is on ground in an airport or in flight, so as to also take into account risks to airport infrastructures or personnel. Additionally, the safe sectors may also vary depending on flight phases, in order to take into account for example that at high-speed flight phases, such as cruise, the aerodynamic effect on the trajectory of the ruptured portion is higher than at low-speed flight phases, such as take-off. These aerodynamic effects will modify the trajectory and the trajectory's envelope. Having different safe sectors for different flight phases allows to take this factor into account.

Similarly, the release device is adapted to not disable the restraining device in at least one predetermined angular sector, called forbidden sector, around the rotation axis. At least one forbidden sector in particular corresponds to an angular sector in which the release of a ruptured blade portion would result in a damaging impact. The forbidden sectors are defined as sectors which are not safe sectors, and as such they are also defined based on the aircraft's geometry, and possibly other factors such as flight phases or operating mode of the aircraft.

In some embodiments, at least one blade comprises an internal cavity extending from its root and within the blade along at least part of its span.

A blade according to the invention may comprise an internal cavity extending from its root towards its tip. The internal cavity extends from the root until a distal end of the internal cavity at a spanwise intermediate location within the blade.

The restraining device may be at least partially installed within the internal cavity. A distal end of the restraining device is anchored within the blade at a distal end of the internal cavity, at the blade anchor.

The restraining device is beneficially thin but resistant enough to the inertial force of the blade's ruptured portion upon blade's rupture. The restraining device is also designed to be resistant to aerodynamic forces due to the air flow around the ruptured portion.

The restraining device is adapted to restrain the ruptured portion of the blade from being ejected from the propeller, even when the propeller is at its maximal rotational speed or in rotational acceleration.

The restraining device may comprise a thin and elongated portion between an anchor in the hub and anchor in the blade.

More particularly the restraining device comprises a thin, elongated and flexible portion extending from the hub anchor to the blade anchor.

In some embodiments the restraining device may comprise a thin and elongated element such as a cable running at least partially within the internal cavity of the blade. The restraining device may for example comprise a braided material cable made of metallic wires or formed from fibers of material with higher strength and low weight such as carbon fibers or high molecular weight polyethylene. A cable allows the internal cavity to be small in diameter while extending through a long portion of the blade's span, thereby having a minimal impact to the blade's structure, while providing an extremely resistant restraining device to radial inertial and aerodynamic forces.

The release device is adapted to rupture the restraining device such that the ruptured portion of the blade is not restrained by the restraining device anymore. The proximal end of the restraining device is separated by the release device from the distal end of the restraining device. The release device is adapted to rupture a predetermined portion of the restraining device. The release device may for example rupture the hub anchor of the restraining device or a cable of the restraining device extending from the hub anchor to the blade anchor.

In some embodiments in which the hub anchor of the restraining device is situated in the root of the blade, the release device is adapted to free the root of the blade from the hub. In such embodiments, the whole blade is released from the hub.

The release device may comprise a pyrotechnic element adapted to rupture a portion of the restraining device.

The pyrotechnic element is adapted to rupture a portion of the restraining device.

However, the release device may comprise, alternatively or in combination to pyrotechnic elements, other rupturing elements such as a cutting device for example.

The release device may comprise a controller adapted to detect the rupture of a blade.

The controller may be embodied by any sort of computing device such as a controller, a microcontroller, an on-board computer, a remote computing device, etc. The controller does not need to be in or on the hub. Although the text refers to 'the' controller, it may be constituted of a plurality of controllers, computing means, etc. or any combination of these.

The controller is adapted to detect the rupture of a blade based on data from one or more sensors. The detection of a rupture of a blade may be obtained for example by sensors, such as accelerometers, detecting a shock and/or vibrations. The detection of a rupture may be obtained by a sensor placed on the restraining device. Such sensors may be able to generate data signals that allow identifying a sudden acceleration of a part of the restraining device. The detection may also or in combination be obtained with one or more sensors in the blade and/or the hub.

The detection of a rupture may also be obtained, for example when the restraining device comprises an elongated element such as a cable, by detecting a tension in the restraining device.

The controller is adapted to activate the release device to disable the restraining device of a blade. The controller is adapted to control the release device and activate the release device, so as to rupture the restraining device and free the ruptured portion of the blade or the whole blade in some embodiments.

The controller is adapted to autonomously activate the release device to ensure that the ruptured portion is released in a safe sector.

Moreover, the controller is adapted to determine the position of a ruptured blade around the rotation axis.

In order to detect the rupture and locate the ruptured blade on the propeller, the controller may receive data signals from sensors on the blades and/or the hub and/or on other parts of the engine and/or the aircraft. Alternatively, or in combination the controller may receive data signals from sensors placed on the restraining devices of the blades.

For example, the propeller may comprise sensors placed on the restraining device so as to detect the rupture of a blade based on an identifier of a sensor specific to this blade. Indeed, the rupture of a specific blade may be reflected in an increased tension in its restraining device.

Alternatively or in combination, data signal from sensors, such as accelerometers for example, placed on the hub or the engine may allow to determine the position of the ruptured blade around the hub, for example based on vibration modes of the propeller.

The controller may be adapted to activate the release device at a predetermined position of the blade around the axis of the hub.

Once the position of the ruptured blade around the hub's longitudinal axis is determined, the controller may activate the release device so that the blade's ruptured portion is released from the propeller in a safe sector around the hub's rotation axis. The ruptured portion of the blade may thus be ejected from the propeller in a direction that presents no threat to the rest of the aircraft or other equipment.

The controller may determine the instant at which it must activate the release device based on the position of the ruptured blade around the rotation axis and the rotation speed of the propeller.

In some embodiments of the invention, at least one blade of the propeller comprises an ejection device adapted to free the root of the blade from its anchoring to the hub.

An ejection device according to the invention is adapted to release a whole blade. In particular, such an ejection device may be able to free a whole blade from its anchoring in the hub of the propeller such that, when in rotation, the whole blade is radially ejected by its inertia as no centripetal force retains it to the hub anymore.

The ejection device may be of different types: mechanical, pyrotechnic, etc.

The controller may be adapted to simultaneously activate the release device and the ejection device of a same ruptured blade such that not only the ruptured portion of the blade is ejected, but the remaining part of the proximal portion of the ruptured blade is also ejected.

In embodiments in which the proximal anchor of the restraining device is situated in the blade's root, the blade may only comprise a release device, which also ensures the function of an ejection device, allowing to release the root of the blade from the hub such that the whole blade is systematically ejected upon activation of the release device.

The ejection device is particularly necessary in addition to the release device when the restraining device is anchored to the hub and not in the root of the blade, and when it is desired to eject the ruptured blade as a whole.

The controller may be adapted to simultaneously disable the restraining device of a first blade and activate the ejection device of a second blade.

In particular, with a first blade ruptured, the controller is adapted to simultaneously activate the ejection device of a second blade, diametrically opposed to the first blade, and the release device of the first blade. In particular the release device is adapted to activate the ejection device and/or the release device of a second blade diametrically opposed to the ruptured blade simultaneously to disabling the restraining device of the ruptured blade.

More particularly, the controller may be adapted to simultaneously activate the ejection device of the first - ruptured - blade and the ejection device of a second blade, diametrically opposed to the first blade, such that both opposed blades are wholly ejected simultaneously.

These embodiments of the invention avoid an imbalanced weight in the propeller that would create vibrations and possible disturbances to the good working of the engine and the aircraft. A good functioning of the engine is thus maintained, with a balanced propeller.

The release device is adapted to disable the restraining device and/or activate the ejection device of the two diametrically opposed blades when both blades to be released are in a safe sector.

The invention also extends to an aircraft comprising at least one propeller according to the invention.

The invention further extends to a method for safely releasing a ruptured blade portion of a propeller comprising:
- monitoring a propeller comprising a hub with a longitudinal axis, called rotation axis, and a plurality of blades, at least one of the blades comprising a restraining device anchored to the hub and anchored within the blade, said restraining device being adapted to restrain a portion of the blade in case of rupture of a proximal portion of the blade,
- detecting a rupture of a blade of the propeller,
- determining the position of the ruptured blade around the rotation axis,
- activating a release device adapted to disable the restraining device of this blade and release the ruptured portion of the blade.

A method of the invention may further comprise activating the release device at a predetermined position of the ruptured blade around the rotation axis.

In particular, in a method of the invention, the ruptured blade portion is released in a safe sector, as described in relation to the propeller's characteristics.

In some embodiments of a method of the invention, the release device is activated in the same revolution of the blade around the rotation axis. According to such embodiments, the ruptured blade portion is released before it makes a full revolution around the propeller's rotation axis. This provides the advantage of limiting possible other damages to the propeller and limiting the duration of having an unbalanced weight around the propeller.

A method of the invention may also comprise activating the release device as soon as it reaches the next safe sector.

A method of the invention may also comprise taking into account the delay between a release command of the controller and the effective release of the blade. - determined by tests for example.

A method of the invention, comprises, in its monitoring step:
- receiving signals from sensors adapted to sense parameters relative to the propeller which allow to detect a rupture of a blade,
- analyzing the signals from the sensors in order to detect the rupture of a blade of the propeller.

Furthermore, a method of the invention analyzing the signals from the sensors may comprise the use of an artificial intelligence module trained with relevant data to identify a rupture of a blade on a propeller based on signals from the sensors.

The relevant data to train the artificial intelligence module may be data based on tests in laboratory and/or computer simulations in which a retro-learning is fed to the artificial intelligence module. Input data for training the artificial intelligence module may be data from sensors in test facilities or computer simulations, in which a blade is ruptured. Output data for training the artificial intelligence module may be data identifying the rupture of a blade and its location around the rotation axis.

The trained artificial intelligence module may then identify the rupture of a blade and its position based on the sensors' data.

The invention also extends to a computer-implemented method for implementing a method according to the invention.

The invention also includes a computer program comprising instructions for implementing a method computer-implemented method according to the invention.

The computer program may comprise instructions in a controller. The computer program may comprise a trained Al module that has been trained with data from sensors (or simulated sensors data) obtained during tests of the propeller or computer simulations of a rupture of a blade on a propeller, to detect events of a blade rupture.

The invention also extends to other possible combinations of features described in the above description and in the following description relative to the figures, in compatible embodiments limited by the claims.

Some specific exemplary embodiments and aspects of the invention are described in the following description in reference to the accompanying figures.
Figure 1 is a partial schematic representation of a longitudinal cross-section of a propeller embodiment according to the invention.
Figure 2 is a schematic representation of a propeller according to figure 1.
Figure 3 is a schematic representation of a propeller according to figures 1 and 2.
Figure 4 is a schematic representation of a propeller according to figures 1 to 3.
Figure 5 is a partial schematic representation of an aircraft according to the invention, represented in a front view.
Figure 6 is a schematic representation of an aircraft according to figure 4.
Figure 7 is a schematic representation of a method according to the invention.

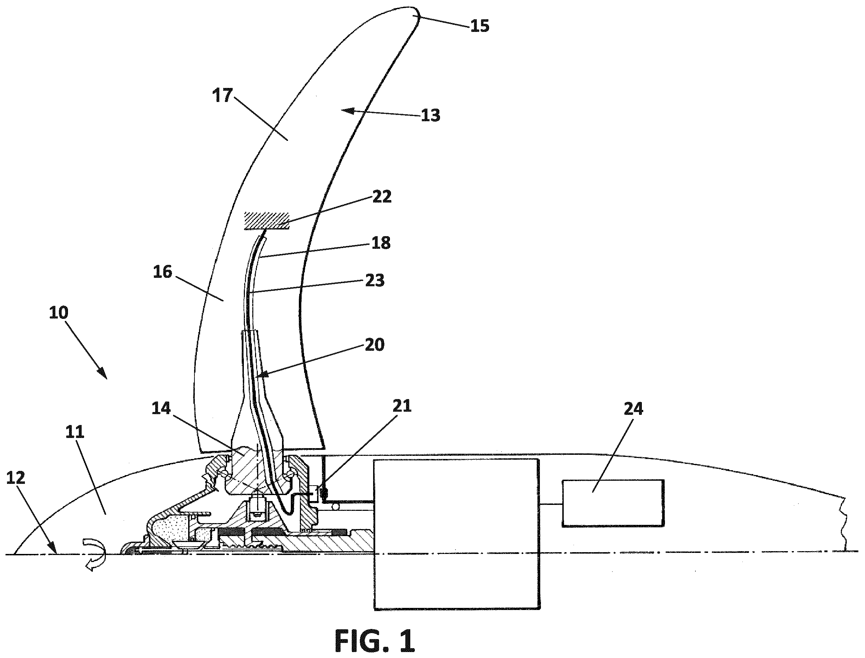

In Figure 1 a portion of a propeller 10 according to the invention is represented in longitudinal cross-section. The propeller 10 represented comprises a hub 11 and a longitudinal axis, called rotation axis 12, around which the hub 11 and the blade 13 rotate. A blade 13 is represented which extends substantially radially with respect to the rotation axis 12. The blade extends from a root 14 to a tip 15. The root 14 of the blade is mounted in the hub 11 so as to be retained to the hub 11. In this embodiment the blade is mounted so as to be able to rotate around the radial axis, said radial axis being perpendicular to the rotation axis 12, so as to modify the angle of incidence of the blade in the air, also called pitch of the blade.

The propeller also comprises a retaining device 20. In this embodiment the retaining device comprises a cable 23 extending from a proximal end anchored to the hub, at a hub anchor 21, to a distal end anchored within the blade 13, at a blade anchor 22. In the invention the blade anchor 22 separates spanwise the proximal portion 16 of the blade 13 from the distal portion 17 of the blade 13. The proximal portion 16 extends from the root 14 to the blade anchor 22. The distal portion 17 extends from the blade anchor 22 to the tip 15.

The blade 13 is also represented in longitudinal cross-section. The blade 13 comprises a cavity 18 within. The cavity 18 extends spanwise from the root 14 of the blade up to the blade anchor 22. The cavity 18 houses the cable 23.

The propeller 10 comprises a release device. The release device comprises a pyrotechnic element 25 adapted to rupture the hub anchor 21 of the retaining device. The release device also comprises a controller 24. The controller 24 may be in wireless communication with the pyrotechnic element so as to trigger the pyrotechnic element.

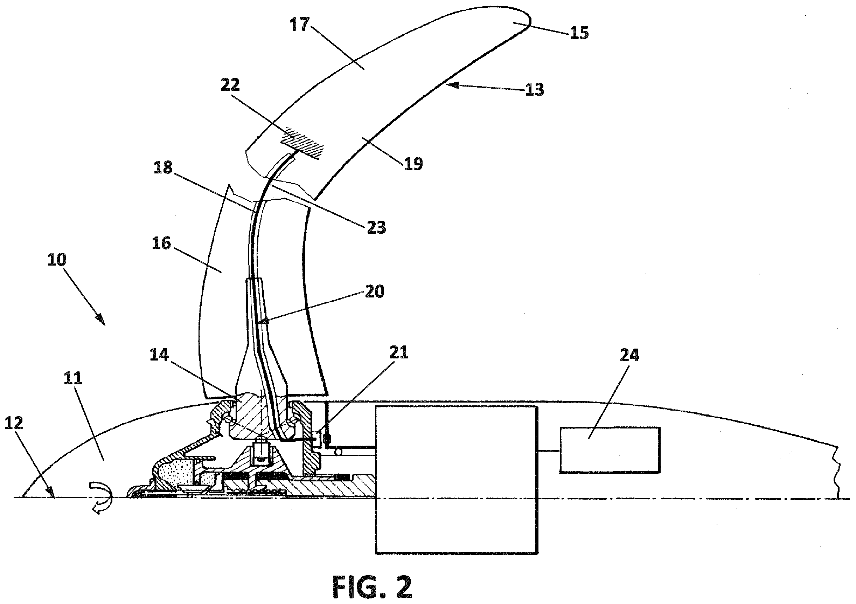

Figure 2 represents a propeller corresponding to the propeller represented in figure 1. In this figure the blade 13 is ruptured in its proximal portion 16. As a consequence, a ruptured portion 19 of the blade 13 (which includes the distal portion 17 of the blade as well as part of the proximal portion 16 of the blade) is separated from the rest of the proximal portion of the blade. The ruptured portion 19 of the blade is radially retained by the retaining device 20. More particularly, when the propeller 10 is in rotation around its rotation axis 12, the ruptured portion of the blade is retained from being ejected by the cable 23.

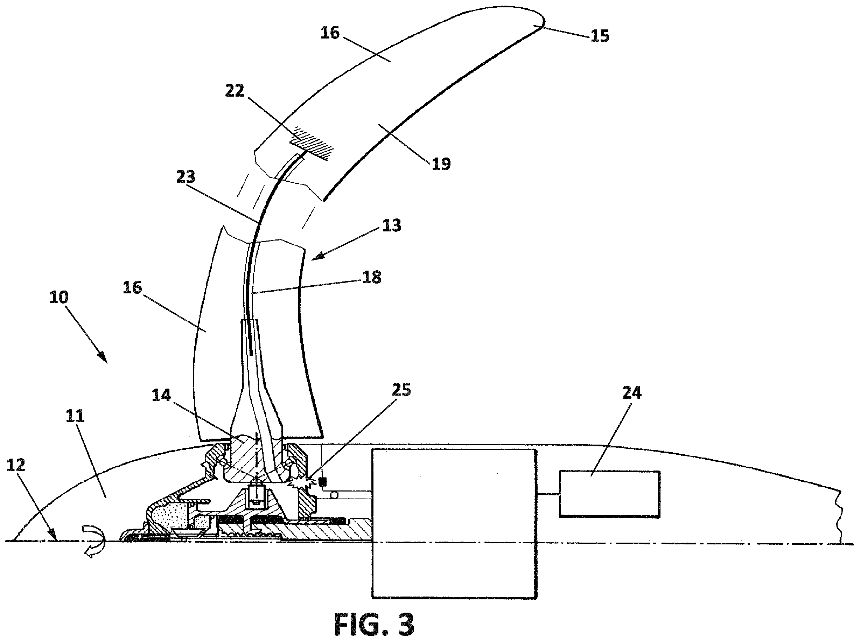

Figure 3 represents a propeller corresponding to the propeller represented in figures 1 and 2. In this figure 3 the release device has been activated so that the restraining device 20 is disabled. A pyrotechnic element 25 has been activated to inactivate the hub anchor 21 of the restraining device 20. The ruptured portion 19 of the blade is, as a consequence, free and released from the propeller 11.

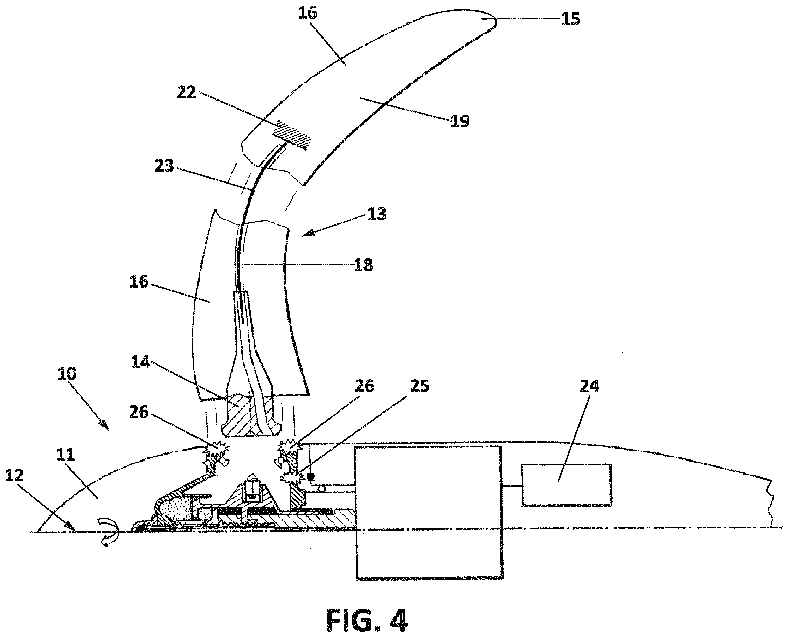

Figure 4 represents the same propeller in which a pyrotechnic ejection device 26 has been activated to release the root 14 of the ruptured blade 13 from the hub 11. That way the ruptured blade 13 as a whole is radially ejected from the hub 11. As represented on figure 4, the ejection device 26 may be activated simultaneously to the release device by the controller 24.

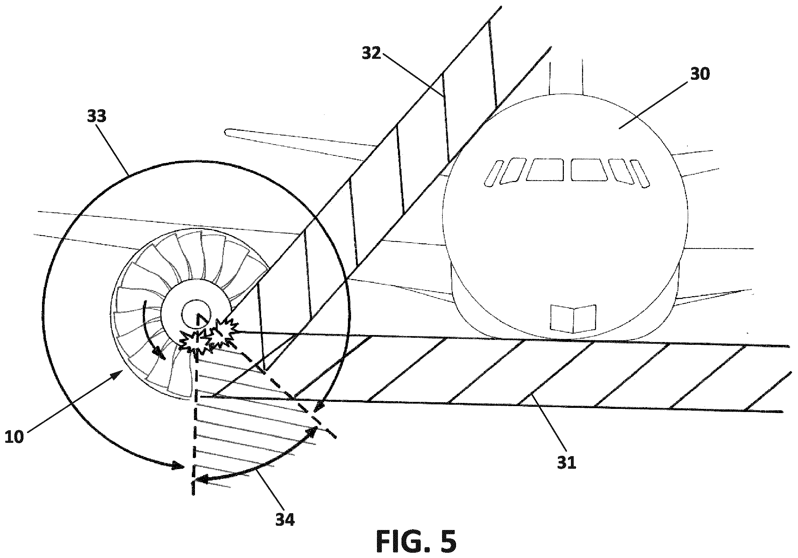

In Figure 5 an aircraft 30 according to the invention is represented which comprises at least one propeller 10. The aircraft 30 is represented as seen from the front. Moreover, the envelopes of possible trajectories of ruptured blade portions or blades are represented. A first envelope 31 corresponds to the trajectory of a released blade released at the last position in the rotation direction (anti-clockwise on this representation) of the propeller at which a blade may be released without impacting the aircraft's fuselage. A second envelope 32 corresponds to the trajectory of a released blade released at the first position in the rotation direction of the propeller at which a blade portion may be released without impacting the aircraft's fuselage. Based on these two envelopes 31,32, an angular sector of the propeller is represented which corresponds to a forbidden sector 34 in which a ruptured blade portion or a blade should not be released or ejected as it may represent a risk for the aircraft fuselage and/or its occupants. Another angular sector of the propeller is represented which corresponds to a safe sector 33 in which a ruptured blade portion or a blade may be released or ejected without a risk for the aircraft's fuselage. As mentioned above, other forbidden sectors and safe sectors may be defined depending on various parameters, including the aircraft geometry (to take into account other portions such as wings, other engines, empennage, etc. of the aircraft), its situation, its operation mode, its flight phase, etc.

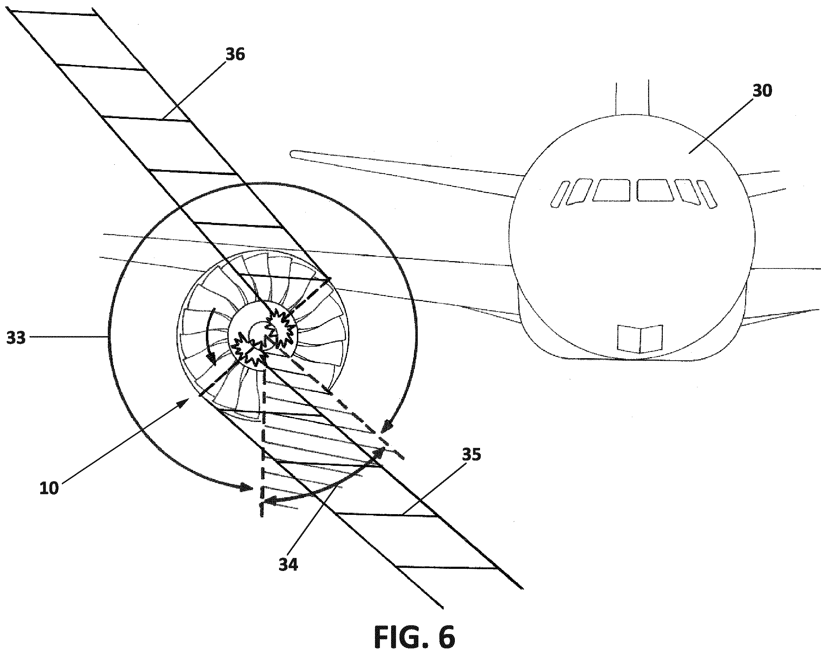

Figure 6 corresponds to the representation of figure 5 with the same safe sector 33 and prohibited sector 34 represented around the rotation axis of the propeller 10. In this figure the envelope 35 of a trajectory ruptured blade and the envelope 36 of a trajectory of a diametrically opposed blade are represented. This corresponds to an embodiment in which both the ruptured blade and a diametrically opposed blade are simultaneously ejected to maintain the balance of the propeller. In such cases, both blades must be released in the safe sector 33. The controller is adapted to calculate the instant at which both blades may be simultaneously released in a safe sector 33. As represented on this figure, the safe sector 33 according to the invention relates to an angular sector around the rotation axis in which the release of a blade may be triggered. The fact that the ejecting envelope 35 crosses with the prohibited sector 34 does not matter.

If it is not possible to release the two blades simultaneously, the controller may determine the second possible instant after the release of the first blade at which the second diametrically opposed second blade may be safely released in a safe sector 33.

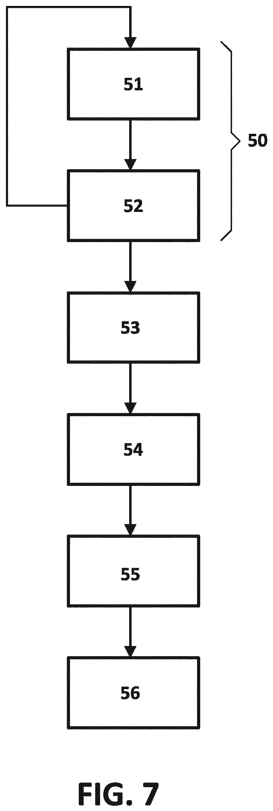

Figure 7 represents a simplified diagram of a method according to the invention.

In the first step 51 the controller receives data from sensors placed on the propeller. As mentioned before the sensors may be of various types and placed at various positions on the hub, the blades, the propeller or even on other parts of the aircraft.

In a second step 52 the controller analyzes the data received from the sensors in order to detect the rupture of a blade. The controller may comprise a trained artificial intelligence module to identify the signals from the sensors which correspond to a rupture of a blade.

The first step 51 and the second step 52 are repeated continuously so as to monitor the propeller. Together they represent a monitoring step 50. As long as no rupture event is detected, the controller only continuously conducts the monitoring step 50.

The analysis conducted in step 52 may in some cases lead to the detection of the rupture of a blade. The detection of such ruptures is represented as a third step 53 which triggers the following steps.

In a fourth step 54, the controller determines which blade is ruptured. This may for example be based on the vibrations of the propeller or by an identifier associated to the retaining means of each blade.

In a fifth step 55 the controller determines the position of the blade on the propeller and its position around the rotation axis. In particular the controller is adapted to compare the blade's position around the rotation axis to the position of the safe sectors.

In a sixth step 56 the controller activates the release device so as to disable the restraining device. In some embodiments the controller may activate the ejection device so as to eject the whole blade at once. The controller may also simultaneously, as mentioned above, activate the ejection device of a diametrically opposed second blade.

The monitoring step 50 continues for the propeller and other propellers of the aircraft while and after steps 53 to 56 are implemented.

The invention is not limited to the specific embodiments herein disclosed as examples. The invention also encompasses other embodiments not herein explicitly described but compatible with the claims, which may comprise various combinations of the features herein described.

## Claims

1. Propeller (10) comprising:
- a hub (11) with a longitudinal axis, called rotation axis (12),
- a plurality of blades,
• each blade extending from a root (14) to a tip (15),
• each blade being anchored by its root (14) to the hub so as to extend radially from the hub,
• at least one blade (13) comprising a restraining device (20) anchored within the blade, said restraining device (20) being adapted to restrain a portion of the blade (13) in case of rupture of a proximal portion (16) of the blade,
**characterized in that** it also comprises a release device adapted to autonomously disable the restraining device (20).

2. Propeller according to claim 1, further **characterized in that** the release device is adapted to disable the restraining device (20) at a predetermined position of the blade (13) around the rotation axis (12).

3. Propeller according to any of claim 1 or 2, further **characterized in that** at least one blade (13) comprises an internal cavity (18) extending from its root (14) and within the blade along at least part of its span.

4. Propeller according to any of claim 1 to 3, further **characterized in that** the restraining device (20) comprises a thin and elongated portion between an anchor in the hub (21) and anchor in the blade (22).

5. Propeller according to any of claim 1 to 4, further **characterized in that** the release device comprises a pyrotechnic element (25) adapted to rupture a portion of the restraining device (20).

6. Propeller according to any of claim 1 to 5, further **characterized in that** the release device comprises a controller (24) adapted to detect the rupture of a blade (13).

7. Propeller according to claim 6, further **characterized in that** the controller (24) is adapted to determine the position of a ruptured blade (13) around the rotation axis (12).

8. Propeller according to any of claim 6 or 7, further **characterized in that** the controller (24) is adapted to activate the release device at a predetermined position of the blade (13) around the rotation axis (12) of the hub.

9. Propeller according to any of claim 1 to 8, further **characterized in that** at least one blade (13) of the propeller (10) comprises an ejection device adapted to free the root (14) of the blade from its anchoring to the hub (11).

10. Propeller according to claim 9 and any of claim 6 to 8, further **characterized in that** the controller (24) is adapted to simultaneously disable the restraining device of a first blade (13) and activate the ejection device of a second blade.

11. Aircraft (30) comprising at least one propeller (10) according to any of claim 1 to 10.

12. Method for safely releasing a ruptured blade portion of a propeller comprising:
- monitoring (50) a propeller comprising a hub with a longitudinal axis, called rotation axis, and a plurality of blades, at least one of the blades comprising a restraining device anchored to the hub and anchored within the blade, said restraining device being adapted to restrain a portion of the blade in case of rupture of a proximal portion of the blade,
- detecting (53) a rupture of a blade of the propeller,
- determining (54) the position of the ruptured blade around the rotation axis,
- activating (55) a release device adapted to disable the restraining device of this blade and release the ruptured portion of the blade.

13. Method according to claim 12, further comprising activating the release device at a predetermined position of the ruptured blade around the rotation axis.

14. Method according to any of claim 12 or 13, in which the monitoring step comprises:
- receiving signals (51) from sensors adapted to sense parameters relative to the propeller which allow to detect a rupture of a blade,
- analyzing the signals (52) from the sensors in order to detect the rupture of a blade of the propeller.

15. Method according to any of claim 12 to 14, **characterized in that** analyzing the signals (52) from the sensors comprises the use of an artificial intelligence module trained with relevant data to identify a rupture of a blade on a propeller based on signals from the sensors.

16. A computer-implemented method for implementing a method of any of claims 12 to 15.

17. A computer program comprising instructions for implementing a method of claim 16.
